(11) **EP 2 734 717 B1**

(12) **EUROPÄISCHE PATENTSCHRIFT**

(45) Veröffentlichungstag und Bekanntmachung des Hinweises auf die Patenterteilung:
**09.09.2015   Patentblatt 2015/37**

(21) Anmeldenummer: **12725387.0**

(22) Anmeldetag: **31.05.2012**

(51) Int Cl.:
*F01N 9/00* ^(2006.01)    *F01N 11/00* ^(2006.01)
*G01M 15/10* ^(2006.01)    *G01N 15/06* ^(2006.01)

(86) Internationale Anmeldenummer:
**PCT/EP2012/060306**

(87) Internationale Veröffentlichungsnummer:
**WO 2013/010703 (24.01.2013 Gazette 2013/04)**

(54) **VERFAHREN ZUR ERMITTLUNG DER PARTIKELANZAHL IM ABGAS VON VERBRENNUNGSMOTOREN**

METHOD FOR DETERMINING THE PARTICLE COUNT IN THE EXHAUST GAS OF INTERNAL COMBUSTION ENGINES

PROCÉDÉ DE COMPTAGE DE PARTICULES DANS LES GAZ D'ÉCHAPPEMENT DE MOTEURS À COMBUSTION INTERNE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.07.2011   AT 10562011**

(43) Veröffentlichungstag der Anmeldung:
**28.05.2014   Patentblatt 2014/22**

(73) Patentinhaber: **AVL List GmbH
8020 Graz (AT)**

(72) Erfinder:
• **SCHIEFER, Erich
A-8900 Selzthal (AT)**
• **BERGMANN, Alexander
A-8052 Graz (AT)**

(74) Vertreter: **Patentanwälte Pinter & Weiss OG
Prinz-Eugen-Straße 70
1040 Wien (AT)**

(56) Entgegenhaltungen:
AT-U2- 6 349          DE-A1-102006 024 089
DE-A1-102006 041 478

**Beschreibung**

Die Erfindung betrifft ein Verfahren zur Ermittlung der Partikelanzahl im Abgas von Verbrennungsmotoren, wobei eine für die Menge der Partikel charakteristische Größe ermittelt wird, beispielsweise in Form der Schwärzung eines Filters oder der Bestimmung der Konzentration, wobei weiters die Saugzeit bzw. das Saugvolumen des Abgases gemessen werden, und wobei allenfalls aus der charakteristischen Größe und der Saugzeit bzw. dem Saugvolumen über eine erste Umrechnungsfunktion die Schwärzungszahl errechnet wird, wobei aus der charakteristischen Größe, der Saugzeit bzw. dem Saugvolumen und den Daten der ersten Umrechnungsfunktion über eine zweite Umrechnungsfunktion die Partikelanzahl ermittelt wird.

Derartige Verfahren werden in Messgeräten für die Russpartikelmessung, hauptsächlich aber nicht ausschließlich für die Messung der Russpartikelemissionen von Explosionskraftmaschinen, angewendet. Neben der Schwärzungszahl (Filter Smoke Number - FSN) kann dabei auch ein Konzentrationswert in mg/m$^3$ ausgegeben werden. Zusätzlich kann, wie in der AT 6349 U1 beschrieben ist, auch der mittlere Partikeldurchmesser ermittelt und für weitere Kalkulationen bereitgestellt werden.

In der DE 102006024089 A1 ist ein Verfahren zur Bestimmung des Beladezustandes eines Rußpartikelfilters im Abgasstrang geoffenbart. Zusätzlich zum Druckverlust am Partikelfilter wird auch noch eine Referenzkomponente gemessen und werden eine erste und eine zweite Kalibrierfunktion erstellt. Die DE 102006041478 A1 wieder beschreibt ein Verfahren zur Ermittlung der Rußkonzentration im Abgas einer Brennkraftmaschine, bei welcher ein sammelnder Partikelsensor die Rußkonzentration bestimmt und das Sensorsignal mittels vorbestimmter Korrekturen, wie z.B. der Temperatur, angeglichen wird.

Die Aufgabe der vorliegenden Erfindung war nun eine Verbesserung der Auswertemöglichkeiten eines eingangs beschriebenen Verfahrens.

Zur Lösung dieser Aufgabe ist die Erfindung dadurch gekennzeichnet, dass zusätzlich die Druckverhältnisse am Filter ermittelt werden, und damit über eine dritte Umrechnungsfunktion daraus und aus der Menge der Partikel der mittlere Partikeldurchmesser bestimmt wird, und aus der charakteristischen Größe, der Saugzeit bzw. dem Saugvolumen, den Daten der ersten Umrechnungsfunktion und aus dem bestimmten mittleren Partikeldurchmesser unter Zuhilfenahme verschiedener Zwischenrechnungsabläufe und Umrechnungsfunktionen, welche aber alle zu einer gemeinsamen vierten Funktion zusammengefasst werden können, über diese vierte Umrechnungsfunktion die Partikelanzahl ermittelt wird.

Für typische Partikelemissions-Ensembles ist die Halbwertsbreite der Verteilungsfunktion der Partikelgrößen um den mittleren Partikeldurchmesser mehr oder weniger gut durch einen konstanten Faktor des mittleren Partikeldurchmessers beschreibbar. Unter Verwendung dieser Daten kann damit aus der Papierschwärzung des Filterpapiers, des gemessenen mittleren Durchmessers und mit dem Wert für die Halbwertsbreite der Partikelverteilung ebenfalls ein Wert für eine Partikelanzahl abgeschätzt bzw. kalkuliert werden, welcher entweder für die Präzisierung der Partikelanzahlkalkulation verwendet wird, oder welcher auch als alleiniger Messwert bzw. Schätzwert ausgegeben wird. Es wurde festgestellt, dass eine Korrelation zwischen Partikelanzahl und Partikelkonzentration vorhanden ist, insbesondere wenn die Messungen sich auf die Gesamtemissionen von festen Partikeln - insbesondere dem Kohlenstoffanteil der Abgaspartikel - beziehen. Dies gilt insbesondere trotzdem oder insbesondere auch wenn die Verweildauer der Partikel vom Zeitpunkt der "Entstehung" bis zum Zeitpunkt der Messung der Konzentration und der Partikelanzahl im Bereich von ca. 1 sec oder größer (aber mindestens größer 0.1 sec) liegt. Da viele Geräte zur Russpartikelmessung integral über die Ablagerung und Agglomeration von Partikeln auf Filterpapier die Messgröße (FSN oder mg/m$^3$) gewinnen, bedeutete dies, dass die "Verweildauer" der Partikel unter dem Gesichtspunkt der Agglomeration immer als sehr viel größer als diese "ca. 1 sec" zu betrachten sind. Dies gilt insbesondere für den Fall, dass die Messwerte über eine oder mehrere Messungen aufintegriert werden und eine Summenauswertung der Messdaten erfolgt.

Eine derartige Messung kann beispielsweise derart ablaufen, dass die von den verschiedenen Testpunkten gemessen Werte von Papierschwärzung und dazugehöriger Messzeit anhand der diversen Zyklusdaten gewichtet und aufsummiert und das Gesamtintegral als "Zyklus" relevanter Messwert in mg/Test und/oder Anzahl/Test ausgegeben wird. Die Aufsummation der Papierschwärzung muß dabei über den Umweg der "Konzentrationswerte" erfolgen, da der Zusammenhang nichtlinear verläuft. Alternativ kann die "Aufsummation der Werte" über die aus der Papierschwärzung kalkulierbare Flächen-Konzentrationen in mg/m$^2$ oder über die Volumenkonzentration in mg/m$^3$ alleine erfolgen. Der Bezug x / Test bedeutet dass die Bezugsgröße die mg alleine, oder mg/m$^3$ Abgas, oder mg/Leistung oder mg/km oder mg/mile... und die äquivalente "Anzahl von Partikeln" /Test...sein kann.

Gemäß einer vorteilhaften Variante der Erfindung ist dieses Verfahren dahingehend erweitert, dass eine Saugzeit von zumindest als 0,1 Sekunden, vorzugsweise von zumindest 1 Sekunde, gewählt wird.

Gemäß einer weiteren Ausführungsform der Erfindung ist vorgesehen, dass aus dem bestimmten mittleren Partikeldurchmesser und einem konstanten Faktor die Halbwertsbreite der Verteilungsfunktion der Partikelgrößen um diesen mittleren Partikeldurchmesser bestimmt wird, und dass aus der charakteristischen Größe, dem bestimmten mittleren Durchmesser und dem Wert für die Halbwertsbreite die Partikelanzahl bestimmt wird.

Eine weitere Ausführungsform der Erfindung ist dadurch gekennzeichnet, dass mehrere Messungen hintereinander durchgeführt werden, die ermittelten Partikel-Mengen nach ihren jeweiligen Saugzeiten, -Volumina bzw. Sauglängen gewichtet aufsummiert bzw. aufintegriert werden, und aus diesen gewichteten aufsummierten Werten die integrale Partikelanzahl ermittelt wird.

Vorteilhafterweise wird zusätzlich zu den angegebenen Merkmalen ein Gesamttestvolumen bestimmt, werden die vorbestimmten Gewichtungsfaktoren proportionalen Volumenflüsse gesammelt und daraus die Menge und Anzahl an Partikeln bestimmt, und werden unter Einbeziehung der Relation zwischen dem jeweiligen Saugvolumen und dem Gesamttestvolumen die integrale Menge und Anzahl der Partikel ermittelt, wobei vorzugsweise der Volumenfluss des Abgases, welcher über das Filterpapier des Messgerätes angesaugt wird, proportional dem Gewichtungsfaktor eingestellt oder geregelt wird, und dadurch die dem Gewichtungsfaktor entsprechende Abgasmenge über diese Filterpapier angesaugt wird.

Gemäß einem weiteren optionalen Merkmal der Erfindung ist vorgesehen, dass mehrere Messungen hintereinander durchgeführt werden, die Menge und Anzahl der Partikel für jede Messung ermittelt werden, und dass ein Mittelwert und die dazugehörige Messwertungenauigkeit bzw. Messwertunsicherheit kalkuliert werden.

Eine weitere Variante der Erfindung ist dann dadurch gekennzeichnet, dass die Abgastemperatur am Probenentnahmeort und/oder die mittlere Verweildauer des Abgases vom Ort der Entstehung der Partikel bis zum Ort der Probeentnahme in die Kalkulation einfließen. Wie festgestellt wurde, kann die Temperatur des Abgases an der Probenentnahmestelle zur Verbesserung und Optimierung der Korrelation zwischen Partikelanzahl und Konzentrationsmessung aus den FSN Werten verwendet werden.

Gemäß einer weiteren Ausführungsform des erfindungsgemäßen Verfahrens ist vorgesehen, dass die zweite Umrechnungsfunktion in doppelt logarithmischer Darstellung und im Bereich von sehr wenigen bis zu ca. $10^{14}$ Partikeln pro Test einen linearen Zusammenhang zwischen Partikelmasse und Partikelanzahl charakterisiert, bei weiterer Erhöhung der Partikelanzahl dann in eine Umkehrfunktion übergeht.

Dabei kann vorzugsweise vorgesehen sein, dass die zweite Umrechnungsfunktion einen Peak bei einer Anzahl von ca. 2 bis 5 x $10^{14}$ Partikeln pro Test aufweist.

Nachfolgend soll die Erfindung anhand von Ausführungsbeispielen und konkreten Anwendungen näher erläutert werden. Die Zeichnungsfigur zeigt dabei den Zusammenhang zwischen Partikelmasse/Test, Partikelmasse/kWh, Partikelmasse/km und der Anzahl der Feststoffpartikel /Test, /km oder /kWh.

Eine bevorzugte Anwendung des erfindungsgemäßen Verfahrens ist die Messung und Abschätzung der Partikelanzahl im Abgas von Verbrennungsmotoren, insbesondere von Dieselmotoren. Die Messung erfolgt beispielsweise mit einem herkömmlichen "Smoke-Meter", in welchem üblicherweise eine Umrechnungsfunktion von Papierschwärzung und Saugzeit bzw. Saugvolumen auf die FSN - und/oder auf die Konzentrationswerte hinterlegt ist, wie etwa in der EP 0 357 668 beschrieben ist.

Die Partikelanzahlberechnung erfolgt mit Hilfe einer Funktion, welche beispielsweise in der Art $Y = 1/(A + B/x)$ dargstellt werden kann, wobei hier x die Konzentration der Partikel mg / m³ und Y die Partikelanzahl / m³ sind. Solche Funktionen sind üblicherweise in bestimmten Konzentrationsbereichen gültig. Die Konzentration kann wie gesagt mit einem Smoke-Meter oder beliebigen anderen Methoden, z.B. gravimetrisch mit Filtermessung und Wägung, gemessen werden. Beim Smoke-Meter wird Probenvolumen bestimmt und durch Filterpapier gesaugt. Das mit Ruß beladene Filterpapier wird beleuchtet die Filterbeladung wird über die Messung des reflektierten Lichtes bestimmt.

Die gemessene Ruß- Partikel- Konzentration Pk der gesammelten Partikel in μg/m³ am Filterpapier kann beispielsweise durch eine Formel der Form

$$Pk = Konz * 1000 \qquad in\ μg/m^3 \qquad (1)$$

berechnet werden, wobei mit Konz = die Konzentration der Partikel in mg/m³ bezeichnet ist. Der Wert von Konz (in mg/m³) in Formel 1 wird dabei beispielsweise anhand der Formalismen im Handbuch für das Smoke Meter AT1240D, rev 7, Mai 2007, Kap 13.5 oder in Motortechnische Zeitschrift 54, Seiten 16-22, 1993 aus der Rußzahl FSN berechnet, oder direkt gemessen.

In Erweiterung dieses Verfahrens kann über eine weitere zugeordnete Funktion aus der Paperschwärzung, Saugzeit bzw. Saugvolumen und den Daten der ersten Funktion zusätzlich auch die Partikelanzahl bestimmt werden, beruhend darauf, dass mit dem Smoke-Meter implizit auch der mittlere Durchmesser der Partikel bestimmt wird und Partikelemissionen innerhalb bestimmter Bandbreiten logarithmischen Normalverteilungen genügen. Die Summe der Masse aller Partikel innerhalb dieser Verteilung ist wieder durch den Wert x aus der obigen Formel gegeben. Unter der Annahme entweder einer festen Halbwertsbreite der Verteilungsfunktion, zusammen mit dem Wert für x gibt es nur eine Lösung, wo die Masse der Summe der Einzelpartikel der angenommenen Verteilung bei gegebenem mittleren Durchmesser (im Diagramm bei 50 nm) die Masse x ergibt.

Je nach Ursprung und Partikelart (z.B. Ruß im Dieselabgas, Ottomotoren-Abgas, Abgas von Schweröl, etc.)

ist die Halbwertsbreite der Partikelanzahlverteilung eine Funktion des mittleren Partikeldurchmessers, oder auch eine mehr oder weniger konstanter Wertegröße. Letztendlich werden die verschiedenen Methoden durchgeführt, zusammen bewertet, und über eine Gesamtfunktion dann eine mittlerer Partikelanzahl mit erhöhter Genauigkeit und Verlässlichkeit berechnet.

Zur Verbesserung der Präzision kann noch die Partikelgröße, vorzugsweise als mittlerer Partikeldurch-messer (Dmm), die beispielsweise gemäß der AT 6349 U1 bestimmt werden kann, als zusätzlicher Parameter für die Kalkulation der Partikelanzahl verwendet werden und kann auch zur weiteren Verbesserung der Aussagekraft die Abgastemperatur am Probenentnahmeort in die Kalkulation mit einfließen.

Beispielsweise kann dafür das Messgerät selbst so eingestellt werden, dass die Messung vollautomatisch immer bis zum Erreichen eines vordefinierten Differenzdruckes am Messfilter erfolgt. Wenn als Differenzdruck 100 mbar gewählt wird, kann beispielsweise anhand der in der AT 6349 U1 dargestellten Zusammenhänge der dazugehörige mittlere Partikeldurchmesser kalkuliert werden. Die übrigen charakteristischen Größen wie Filterbeladung, Papierschwärzung, Saugvolumen, und die Berechnung Konzentration und/oder FSN können an diesem Punkt standardmäßig erfasst werden.

Unter der Annahme der Verwendung von 100 mbar als Schwellwert für den Unterdruck, bei dem die Messung unterbrochen, die Werte/Daten gespeichert werden, würde sich folgender Funktionszusammenhang ergeben:

$$Dmm = 1{,}1246 \times 10^{-03} x^2 + 2{,}1428 \times 10^{-01} x + 4{,}0815 \times 10^{+01}, \qquad (2)$$

mit x = die Flächenbeladung des Filterpapiers in mg/m$^2$.

Die Funktionsparameter können je nach Setup und verwendetem Filterpapier und definiertem Differenzdruck am Filterpapier entsprechend variieren.

Ein weiterer Parameter, der zur Verbesserung der Aussagekraft in das Verfahren einfließen kann, ist die mittlere Verweildauer des Abgases vom Ort der Entstehung, z. B. den Auslassventilen einen Motors, bis zum Ort der Probeentnahme für die Partikelzählung (aus FSN und der zusätzlichen Funktion). Dabei kann diese Verweildauer aus dem Auspuffvolumen und dem Massenstrom des Abgases kalkuliert oder auch aus Auspuffvolumen, Hubvolumen, Drehzahl, Druck und Temperatur im Auspuffrohr oder auch durch andere äquivalente Methodiken erhalten werden, wobei die Werte entweder eingegeben oder abgeschätzt oder gemessen werden können.

Bei Bedarf ist auch die Durchführung von mehreren Messungen hintereinander möglich. In diesem Fall werden aus den Messwerten von PS und Saugvolumen (oder Saugzeit) die jeweiligen Konzentrationen je m$^3$ kalkuliert und nach ihren jeweiligen Saugzeiten (oder Volumina bzw. Sauglängen) gewichtet aufsummiert (bzw. aufintegriert). Aus diesen gewichteten aufsummierten Werten ist dann die Kalkulation einer integralen Konzentration in mg/m$^3$ oder die Partikel-anzahl N in N/m$^3$ möglich. Alternativ dazu könnte auch aus mehreren Messungen ein Mittelwert und die dazugehörige Messwertungenauigkeit bzw. Messwertunsicherheit kalkuliert sowie aus den einzelnen Messwerten der "zeitliche Verlauf innerhalb einer Messreihe" angezeigt werden. In beiden Fällen ist es vorteilhaft, wenn einerseits mehrere Messwerte von PS und Saugvolumen (Saugzeit) sowohl zwischengespeichert und aufintegriert/aufsummiert und integral ausgewertet werden, bzw. auch aus den einzelnen Messwerten von PS und Saugvolumen jeweils eine Konzentration in mg/m$^3$ oder die Partikelanzahl in N/m$^3$ kalkuliert wird. Aus den Daten der PS und der Saugvolumina (Saugzeiten) kann auch ein integraler Summenwert der Konzentration und/oder der Partikelanzahl kalkuliert werden, dem eine Messwertunsicherheit zugeordnet werden kann, welche sich einerseits aus der Messgeräte - internen Nullpunktsstabilität und der Messwertungenauigkeit selbst ergibt.

Andererseits kann zusätzlich ein dynamischer Verlauf der Messwerte während des Testablaufes erhalten werden, welcher Informationen über zeitliche Variationen liefern kann und dessen "dynamische oder quasidynamische" Genauigkeit einerseits der Statistik der Einzelmessungen und zusätzlich auch der inneren Messwertreproduzierbarkeit des integralen Messwertes genügen muß und deren Gesamtgenauigkeit damit allen zuvor genannten Bedingungen genügen muss, womit eine zusätzliche Verbesserung der Messwertreproduzierbarkeit erhalten werden kann.

Auch zur Messung der Partikelanzahl im Abgas von Verbrennungsmotoren von Emissionszyklen kann eine Variante des Verfahrens herangezogen werden. Diese Variante sieht vor, dass die bei unterschiedlichen Testpunkten gemessenen Papierschwärzungswerte und die dazugehörigen Messzeiten zwischengespeichert werden. In weiterer Folge wird die im Smokemeter hinterlegte Umrechnungsfunktion von Papierschwärzung und Saugzeit bzw. Saugvolumen auf die FSN Werte verwendet, um aus diesen Messdaten der Papierschwärzungen und Messzeiten (Saugzeit und/oder Saugvolumen) die Konzentrationen der einzelnen Punkte zu kalkulieren. Anhand von Daten vorgegebener stationärer oder dynamischer Zyklen können diese Werte zeitlich gewichtet dann integriert (oder äquivalent aufsummiert) werden. Daraus kann beispielsweise ein zyklusintegrierter Messwertes in mg Partikel/Test oder FSN/Test ermittelt werden, oder es kann unter Verwendung der bereits in der grundlegenden Ausführungsform vorgesehenen weiteren Umrechnungsfunktion aus der Paperschwärzung, der Saugzeit bzw. dem Saugvolumen und aus den Daten von FSN oder mg/Test, auch die Partikelanzahl/Test berechnet werden.

Dabei können die Partikelmesswerte mehrerer verschiedener Testpunkte auf einem einzigen Filterpapier aufgesammelt werden, wobei die Möglichkeit besteht, die Dauer des "Aufsammelns" der Partikel auf dem Filterpapier bei jedem einzelnen Messwerte proportional zum Gewichtungsfaktor eines definierten Meßzyklusses zu wählen. Um die Notwendigkeit eines Papiervorschubs während des Aufsammelns der Partikel zu vermeiden, kann das Sammeln durch die Ein-/Ausschaltsteuerung der im Gerät verwendeten Pumpe erfolgen. Ein Unterbrechen und Papiervorschub in diesem Testmodus nur dann vorgesehen, wenn dies aus messtechnischen Genauigkeitsgründen erforderlich ist.

Die Sauglänge wird bei dieser Verfahrensvariante aus allen für das Aufsammeln der Partikeln am Filter sich ergebenden Volumina berechnet, und die integral sich ergebende Summe der Papierschwärzungen wird für die Berechnung weiterer Daten verwendet. So kann beispielsweise aus der Papierschwärzung und der Sauglänge die integrale Massenbeladung kalkuliert werden, aus welcher dann weiter - wie oben erläutert - eine Partikelanzahl berechnet wird. Dabei können bei Bedarf die zuvor schon diskutierten Zusatzwerte zur Verbesserung der Resultate verwendet werden. Die Gewichtungsfaktoren können entweder selbst gewählte Parameter sein oder sich aus gesetzlich vorgeschriebenen stationären oder auch dynamischen Testzyklen ergeben.

Für den Fall einer starken Beladung des Filters mit Partikeln, bei der die Messung vorzeitig abgebrochen werden muss, werden vorteilhafterweise die Volumenmesswerte und die dazugehörigen Papierschwärzungen und übrigen Daten zwischengespeichert. Nach einem Papiervorschub ohne Spülung der Probenahmeleitungen werden dann die weiteren Teile des Zyklusses wie oben beschrieben weiter gewichtet aufgesammelt. Bei Bedarf können noch weitere Papiervorschübe mit Zwischenspeicherung der Daten erfolgen. Bereits während der Messungen oder auch erst am Ende des Test-/Meßzykluses werden dann die einzelnen Ergebnisse zusammen mit der Sauglänge oder dem Saugvolumen von der Papierschwärzung in mg/m$^3$ umgerechnet. Dabei kann auch eine entsprechend der integralen einzelnen Saugvolumina gewichtete und aufintegrierte Massenbestimmung erfolgen. Schließlich kann aus den Daten die Zyklusemission in mg(Masse)/Test bzw. wie weiter oben erläutert in Anzahl Partikel/Test ausgegeben werden.

Vorteilhafterweise erfolgt die Sammlung der Partikel auf dem Filter mittels einer drehzahlgeregelten Pumpe, welche das Meßgas über das Filter zieht, wobei der Volumenfluß über diese Pumpe direkt proportional zum Abgasmassenfluß eingeregelt wird. Der über das Filter mit Hilfe der Pumpe eingeregelte Volumenfluss wird vorzugsweise immer auf den internen Normierungswert der FSN bzw. der mg/m$^3$ von 100 kPa und 25°C (298°K) bezogen. Bei stationären Zyklen wird der Gewichtungsfaktor entweder bei der Endberechnung mit einbezogen oder alternativ dazu als volumenproportionaler Faktor mit einbezogen. Vorteilhafterweise wird eine drehzahlgeregelte Pumpe vorzugsweise bei der Messung von dynamischen Fahrzyklen verwendet werden.

Grundsätzlich können diese Verfahren auch für die Kalkulation der Anzahl von Partikeln aus Konzentrationswerten generell verwendet werden, wenn durch die hier vorgestellten Maßnahmen beispielsweise die Partikelgröße und/oder durch die Temperaturmessung oder die Messung der Verweildauer zusätzliche Informationen erhältlich sind. Bei sehr niederen Emissionen welche bei Verwendung von Partikelfiltern im Bereich von 1 μg/m$^3$ Russpartikelanteile (bzw. im Bereich von 10$^{11}$ Partikel/m$^3$ liegen, ist damit zu rechen, dass die Messzeiten für die verwendeten Messsysteme groß werden. Um dies möglichst zu umgehen, bieten viele Messgeräte auch die Möglichkeit, die gemessenen Werte der Papierschwärzung und der jeweils gemessenen Volumina aufzusummieren und aus diesem integralen Wert die Konzentration, den FSN Wert und die Partikelanzahl zu berechnen.

Bei Bedarf ist es alternativ auch noch möglich, die bei einzelnen Testpunkten gemessenen Einzelwerte aus Papierschwärzung und Messzeit (bzw. dem Messvolumen) zu gewichten und die Messwerte eines kompletten Zyklusses zu simulieren, deren jeweiligen Werte aufzusummieren bzw. zu integrieren. Daraus ergibt sich die Möglichkeit, wieder einen oder mehrere Messwert(e) in mg/Test oder FSN/Test oder Partikelanzahl/Test zu kalkulieren.

In der Tabelle 1 ist ein Beispiel dafür dargestellt. Diese Tabelle 1 zeigt beispielhaft Resultate für Konzentrationen, welche sich aus einzelnen Messungen eines Testlaufes und den erhaltenen Rohdaten-Messwerten von Papierschwärzung und Sauglänge und den sich daraus ergebenden Konzentrationen kalkulieren lassen. Der Gewichtungsfaktor in Tabelle 1 ist hier bereits auf m$^3$ äquivalente (Gewichtung-) Dimensionen umgerechnet.

Der Summenwert in Spalte 9 hat beim dargestellten Beispiel die Dimension mg/Test, die aus der Summe daraus berechnete Anzahl N in Spalte 9, die Dimension Anzahl/Test. Es ist hier explizit zu erwähnen, dass diese Art der formalen Berechnung in Spalte 9 auch dann gilt, wenn sich aus einer derartigen gewichtete Summe die Werte in mg/Test, in mg/km, mg/kWh ergeben. Daraus ist anhand des gegebenen Formalismen ein Anzahlwert in N/Test, N/km oder N/kWh äquivalent kalkulierbar.

In Spalte 8 wurde dargestellt, welche Werte sich ergeben, wenn die aus einzelnen ungewichteten Konzentrationswerten berechneten Partikelanzahlen gewichtet werden und daraus die Anzahl/Test berechnet wird. Es ist hier zu erwähnen, dass diese Berechnung mathematisch nicht vollkommen exakt ist, da die Zusammenhänge zwischen Anzahl und Masse nicht linear sind.

In Spalte 10 ist das Resultat für den Fall berechnet, dass die Summe der Partikelanzahl des Zyklus aus den gewichteten Massen der einzelnen Testteile als Konzentration *Gewichtung berechnet wird. Das Summenresultat von N in Spalte 10 ist erwartungsgemäß in etwa - aber nicht vollkommen - gleich dem Resultat für N in Spalte 9 oder auch der Spalte 8. Tabelle 1 a zeigt die Berechnungsresultate unter Verwendung des Gesamtvolumenflusses der Tabelle 2 von 43,33 m$^3$.

Tabelle 1

| 1 | 2 | 3 | 4 | 5 | 6 | 7 | 8 | 9 | 10 |
|---|---|---|---|---|---|---|---|---|---|
| Messung | Papierschwärzung PB | Saugvolumen Liter | Sauglängem | Konzentr. $mg/m^3$ | Anzahl aus $mg/m^3$ | Gewichtung in $m^3$ | **Anzahl Ni gewichtet aus (6)** | Gewichtete Masse. in mg | Anzahl N aus gew. Konz |
| 1 | 0,5 | 2 | 2,87 | 1,08 | $5,00 \times 10^{12}$ | 0,2 | **$1,00 \times 10^{12}$** | 0,216 | $1,02 \times 10^{12}$ |
| 2 | 1 | 7 | 10,04 | 0,729 | $3,39 \times 10^{12}$ | 0,1 | **$3,39 \times 10^{11}$** | 0,0729 | $3,46 \times 10^{11}$ |
| 3 | 0,07 | 10,5 | 15,05 | 0,025 | $1,17 \times 10^{11}$ | 0,3 | **$3,50 \times 10^{10}$** | 0,075 | $3,56 \times 10^{11}$ |
| 4 | 0,4 | 2 | 2,87 | 0,83 | $3,85 \times 10^{12}$ | 0,1 | **$3,85 \times 10^{11}$** | 0,083 | $3,94 \times 10^{11}$ |
| 5 | 2 | 2,7 | 3,87 | 5,07 | $2,28 \times 10^{13}$ | 0,0 5 | **$1,14 \times 10^{12}$** | 0,2535 | $1,20 \times 10^{12}$ |
| 6 | 1 | 5 | 7,16 | 1,009 | $4,68 \times 10^{12}$ | 0,1 | **$4,56 \times 10^{11}$** | 0,1009 | $4,79 \times 10^{11}$ |
| 7 | 0,3 | 1 | 1,43 | 1,22 | $5,65 \times 10^{12}$ | 0,1 5 | **$8,47 \times 10^{11}$** | 0,183 | $8,68 \times 10^{11}$ |
| $\Sigma$ | | | | | | $\Sigma = 1$ | $\Sigma\,(Ni) = $ **N:4,2 $\times 10^{12}$** | $\Sigma = 0,9838$ **N:4.64 $\times 10^{12}$** | **N=4,67 $\times 10^{12}$** |

EP 2 734 717 B1

Tabelle 1a

| 1 | 7 | 8 | 9 | 6a | 10 |
|---|---|---|---|---|---|
| Messung | Gewichtung | Gewichtung bei 43,33 m$^3$ | Gewichtete Masse. in mg | Anzahl N aus Tab1 (6a)*44,33 | Anzahl N aus gew. Konz. |
| 1 | 0,2 | 8,67 | 9,36 | 4,33 x 10$^{13}$ | 4,07 x 10$^{13}$ |
| 2 | 0,1 | 4,33 | 3,16 | 1,47 x 10$^{13}$ | 1,44 x 10$^{13}$ |
| 3 | 0,3 | 13,00 | 0,32 | 1,52 E+12 | 1,51 E+12 |
| 4 | 0,1 | 4,33 | 3,60 | 1,67 x 10$^{13}$ | 1,63 x 10$^{13}$ |
| 5 | 0,05 | 2,17 | 10,98 | 4,94 x 10$^{13}$ | 4,72 x 10$^{13}$ |
| 6 | 0,1 | 4,33 | 4,37 | 1,98 x 10$^{13}$ | 1,97 x 10$^{13}$ |
| 7 | 0,15 | 6,50 | 7,93 | 3,67 x 10$^{13}$ | 3,48 x 10$^{13}$ |
| $\Sigma$ | $\Sigma$=1 | $\Sigma$=43,33 | $\Sigma$=39,72 N=1,41 x 10$^{14}$ | N=1,82 x 10$^{14}$ | N=1,75 x 10$^{14}$ |

Unter Berücksichtung von den verschiedenen Algorithmen ergibt sich, dass bei denselben Messergebnissen in mg/m$^3$ der Einzeltests (Spalte 5 der Tabelle 1) bei den Einzelwerten bei einem Abgas-Testvolumen von ca. 43 m$^3$ die Partikelanzahl sich im Bereich von 1.4 bis 1.82 *10^14 (1.6e14 $\pm$15%) je Test befindet, während bei einem Abgas-Testvolumen von 1 m$^3$ (Tabelle1) eine Bandbreite der Ergebnisse von 4.2 bis 4.7*10$^{12}$ Partikel/Test resultiert.

Für die Berechnung der Anzahl/Test aus den Konzentrationswerten in mg/m3 oder mg/Test der Tabelle 1 und 1a wurde folgende Funktion verwendet:

Partikel-Anzahl/Test = Y
Partikel-Konzentration(in mg)/Test = x

$$Y = 1/(a + b/x)$$

mit a=1,71 x 10^-15; b=2,14 x 10^-13, für Konzentrationswerte im Bereich bis zu 100 mg/Test.

Die Variationsbandbreite des Koeffizienten a ist ca. $\pm$20%, für b ca. $\pm$5% des angegebenen Wertes.

Alternativ kann für höhere Konzentrationen auch folgende Funktion verwendet werden:

$$Y = (4*a/x^{\wedge}(c+1)*b^{\wedge}(c+1)*c^2)/(c-1+c*x^{\wedge}(-c)*b^{\wedge}c+x^{\wedge}(-c)*b^{\wedge}c)^2$$

Mit a= 2,50E+14 b= 100 c=2
für Konzentrationswerte im Bereich von 0 bis zu >2000 mg/Test.

Die angegeben Gewichtungsfaktoren beziehen sich immer auf den Test-Zyklusteil und beinhalten die geförderten Abgasmengen bzw. Abgasmassen. Die "Summe aller Gewichtungsfaktoren" ist immer auf 1 normiert. Für die Berechnung derartiger Gewichtungen ist in der folgenden Tabelle 2 ein Beispiel angegeben:

Tabelle 2:

| 1 | 2 | 4 | 5 | 6 | 7 |
|---|---|---|---|---|---|
| Messung | Massenfluss kg/h | Zyklus-Wichtungsfaktor in h | Gewichtete Massen in kg | Gewichteter Volumenfluß in m$^3$ | GewichtungsFaktor |
| 1 | 20 | 0,3 | 6 | 5,13 | 0,12 |
| 2 | 70 | 0,15 | 10,5 | 8,98 | 0,21 |
| 3 | 105 | 0,05 | 5,25 | 4,49 | 0,10 |
| 4 | 40 | 0,1 | 4 | 3,42 | 0,08 |

(fortgesetzt)

| 1 | 2 | 4 | 5 | 6 | 7 |
|---|---|---|---|---|---|
| 5 | 120 | 0,1 | 12 | 10,27 | 0,24 |
| 6 | 60 | 0,13 | 7,8 | 6,67 | 0,15 |
| 7 | 30 | 0,17 | 5,1 | 4,36 | 0,10 |
| $\Sigma$ | | $\Sigma$=1 | $\Sigma$ = 50,65 | 43,33 | $\Sigma$ =1 |

Der Massenfluss in kg/h ist der Massenfluss des Motors welcher sich bei 1 Stunde Konstantfahrt bei diesem Testpunkt ergeben würde. Der Zyklus-Gewichtungsfaktor ist entweder individuell ausgewählt, oder ist durch gesetzliche Vorgaben, Normen oder Regelungen vorgegeben. Der Wert kann als zeitproportionaler Wert verwendet werden

Die gewichtete Masse jedes Testteils = Massenfluss (in kg/h) * Gewichtungsfaktor (in h).

Das gewichtete Test-Volumen ergibt sich wie folgt: die gewichtete Masse wird auf den Dichte-Normwert des Messgerätes von 100 kPa und 25°C umgerechnet. (Masse in kg / Dichte in kg/m$^3$ ergibt m$^3$ gewichtetes Testvolumen). Der Gewichtungsfaktor in Spalte 7 selbst ergibt sich hier als gewichtetes Volumen des Tests im m$^3$, dividiert durch die Summe aller gewichteten Volumina der einzelnen Tests. Die Summe aller Werte ist 1. Die Dimension ist m$^3$.

Im Falle, dass die Messung aller Partikel auf ein einziges Filterpapier erfolgen soll und die Messung an diskreten stationären Messpunkten erfolgt, sind zwei unterschiedliche Möglichkeiten für die Durchführung gegeben. Einerseits kann ein Gesamttestvolumen, beispielsweise 20 Liter, als Gesamtsaugvolumen definiert und die den Gewichtungsfaktoren (z.B. nach Spalte 7 in Tabelle 1 oder 2) proportionalen Volumenflüsse über das Filterpapier gesammelt werden. Daraus ergeben sich die Masse und die Anzahl an Partikeln, gemessen mit dem Filterpapier. Unter Einbeziehung der Relation zwischen dem Saugvolumen über das Filterpapier und dem gesamten Abgasvolumen über den Test ergeben sich daraus die mg/Test bzw. die Partikelanzahl/Test.

In den obigen Beispielen wäre beispielsweise die in Tabelle 1 Spalte 9 und 10 dargestellten Massen und Anzahlen auf ein Volumen von 1 m$^3$ bezogen. Wenn der Gesamtvolumenfluss wie in Tabelle 2 dargestellt 43,33 m$^3$ beträgt, ist der korrekte Wichtungswert aber der in Tabelle 2, Spalte 6, dargelegte Volumenwert direkt. Durch die nichtlineare Beziehung ergeben sich dann bei einem Volumenfluss des Motors im gesamten Zyklus von 43,33 m$^3$ und unter Verwendung der Gewichtungsfaktoren in Spalte 7 der Tabelle 1, die in Tabelle 1a dargestellten Werte. Alternativ kann die Gewichtung auch dadurch erfolgen, dass der Volumenfluss des Messgases über das Filterpapier proportional dem Gewichtungsfaktor eingestellt oder geregelt wird und dadurch die dem entsprechende Gewichtungsfaktor proportionale Abgasmenge über das Filterpapier angesaugt wird.

Für den Fall, dass dynamische Fahrzyklen integral über das Filterpapier mitgemessen werden sollen, kann nur die zuletzt beschriebene Vorgangsweise gewählt werden, wobei in diesem Falle der Volumenfluss über das Filterpapier proportional der gemessenen Abgasmenge eingestellt wird. Vorzugsweise soll dabei der Volumenfluss über ein dem Abgasmassenfluss proportionales Signal mittels einer regelbaren Pumpe oder eines Massendurchflussreglers eingestellt werden. Der Zusammenhang zwischen Partikelmasse/Test, Partikelmasse/kWh, Partikelmasse/km und der Anzahl der Feststoffpartikel /Test, /km oder /kWh ist in der Zeichnungsfigur als Diagramm dargestellt. Mit Partikel sind hier nur Partikel aus "festem Kohlenstoff" gemeint.

Die vorstehenden Methoden der Regelung können auch andere Bezugsgrößen für Temperatur und Druck verwenden, allerdings müssten dann nichtlineare Umrechungen für die korrekte Umrechnung der Parameter durchgeführt werden.

**Patentansprüche**

**1.** Verfahren zur Ermittlung der Partikelanzahl im Abgas von Verbrennungsmotoren, wobei eine für die Menge der Partikel charakteristische Größe ermittelt wird, beispielsweise in Form der Schwärzung eines Filters oder der Bestimmung der Konzentration, wobei weiters die Saugzeit bzw. das Saugvolumen des Abgases gemessen werden, und wobei allenfalls aus der charakteristischen Größe und der Saugzeit bzw. dem Saugvolumen über eine erste Umrechnungsfunktion die Schwärzungszahl errechnet wird, wobei aus der charakteristischen Größe, der Saugzeit bzw. dem Saugvolumen und den Daten der ersten Umrechnungsfunktion über eine zweite Umrechnungsfunktion die Partikelanzahl ermittelt wird, **dadurch gekennzeichnet, dass** zusätzlich die Druckverhältnisse am Filter ermittelt werden, und damit über eine dritte Umrechnungsfunktion daraus und aus der Menge der Partikel der mittlere Partikeldurchmesser bestimmt wird, und aus der charakteristischen Größe, der Saugzeit bzw. dem Saugvolumen, den Daten der ersten Umrechnungsfunktion und aus dem bestimmten mittleren Partikeldurchmesser unter Zuhilfenahme verschiedener Zwischenrechnungsabläufe und Umrechnungsfunktionen, welche aber alle zu einer gemeinsamen vierten Funktion zusammengefasst werden können, über diese vierte Umrechnungsfunktion die Partikelanzahl ermittelt wird.

**2.** Verfahren nach Anspruch 1, **dadurch gekennzeichnet, dass** eine Saugzeit von zumindest als 0,1 Sekunden, vorzugsweise von zumindest 1 Sekunde, gewählt wird.

**3.** Verfahren nach Anspruch 1, **dadurch gekennzeichnet, dass** aus dem bestimmten mittleren Partikeldurchmesser und einem konstanten Faktor die Halbwertsbreite der Verteilungsfunktion der Partikelgrößen um diesen mittleren Partikeldurchmesser bestimmt wird, und dass aus der charakteristischen Größe, dem bestimmten mittleren Durchmesser und dem Wert für die Halbwertsbreite die Partikelanzahl bestimmt wird.

**4.** Verfahren nach einem der Ansprüche 1 bis 3, **dadurch gekennzeichnet, dass** mehrere Messungen hintereinander durchgeführt werden, die ermittelten Partikel-Mengen nach ihren jeweiligen Saugzeiten, -Volumina bzw. Sauglängen gewichtet aufsummiert bzw. aufintegriert werden, und aus diesen gewichteten aufsummierten Werten die integrale Partikelanzahl ermittelt wird.

**5.** Verfahren nach einem der Ansprüche 1 bis 4, **dadurch gekennzeichnet, dass** zusätzlich zu den angegebenen Merkmalen ein Gesamttestvolumen bestimmt wird, dass die vorbestimmten Gewichtungsfaktoren proportionalen Volumenflüsse gesammelt werden und daraus die Menge und Anzahl an Partikeln bestimmt wird, und dass unter Einbeziehung der Relation zwischen dem jeweiligen Saugvolumen und dem Gesamttestvolumen die integrale Menge und Anzahl der Partikel ermittelt werden, wobei vorzugsweise der Volumenfluss des Abgases, welcher über das Filterpapier des Messgerätes angesaugt wird, proportional dem Gewichtungsfaktor eingestellt oder geregelt wird, und dadurch die dem Gewichtungsfaktor entsprechende Abgasmenge über diese Filterpapier angesaugt wird.

**6.** Verfahren nach einem der Ansprüche 1 bis 5, **dadurch gekennzeichnet, dass** mehrere Messungen hintereinander durchgeführt werden, die Menge und Anzahl der Partikel für jede Messung ermittelt werden, und dass ein Mittelwert und die dazugehörige Messwertungenauigkeit bzw. Messwertunsicherheit kalkuliert werden.

**7.** Verfahren nach einem der Ansprüche 1 bis 6, **dadurch gekennzeichnet, dass** die Abgastemperatur am Probenentnahmeort und/oder die mittlere Verweildauer des Abgases vom Ort der Entstehung der Partikel bis zum Ort der Probeentnahme in die Kalkulation einfließen.

**8.** Verfahren nach einem der Ansprüche 1 bis 7, **dadurch gekennzeichnet, dass** die zweite Umrechnungsfunktion in doppelt logarithmischer Darstellung und im Bereich von sehr wenigen bis zu ca. $10^{14}$ Partikeln pro Test einen linearen Zusammenhang zwischen Partikelmasse und Partikelanzahl charakterisiert, bei weiterer Erhöhung der Partikelanzahl dann in eine Umkehrfunktion übergeht.

**9.** Verfahren nach Anspruch 8, **dadurch gekennzeichnet, dass** die zweite Umrechnungsfunktion einen Peak bei einer Anzahl von ca. 2 bis 5 x $10^{14}$ Partikeln pro Test aufweist.

**Claims**

**1.** A method for detecting the number of particles in the exhaust gas of combustion engines, wherein a value that is characteristic for the quantity of the particles is determined, for example, in form of the blackening of a filter or the determination of the concentration, wherein, furthermore, the suction time and/or suction volume of the exhaust gas is/are measured, and wherein, if necessary, the blackening rate is calculated based on the characteristic value and the suction time and/or the suction volume by way of a first conversion function, wherein the number of particles is determined based on the characteristic value, the suction time and/or the suction volume as well as the data of the first conversion function by way of a second conversion function, **characterized in that**, in addition, the pressure ratios at the filter are determined, and the mean particle diameter is determined based on this by way of a third conversion function and the quantity of particles, and **in that** the number of particles is established based on the characteristic value, the suction time and/or the suction volume, the data of the first conversion function and based on the determined mean particle diameter, relying therein on various intermediate computing processes and conversion functions, all of which can, however, be combined into a common fourth function, and wherein the number of particles is detected by way of this fourth conversion function.

**2.** The method according to claim 1, **characterized in that** the selected suction time is at least 0.1 seconds, preferably at least 1 second.

3. The method according to claim 1, **characterized in that** the half-width of the distribution function of the particle sizes around its mean particle diameter is determined based on the established mean particle diameter and a constant factor, and **in that** the number of particles is determined based on the characteristic value, the established mean diameter and the value for the half-width.

4. The method according to any one of the claims 1 to 3, **characterized in that** a plurality of measurements is taken in succession, the detected quantities of particles are added up and/or integrated according to their respective suction times, suction volumes and/or suction lengths, and **in that** the integral number of particles is determined from these weighted added up values.

5. The method according to any one of the claims 1 to 4, **characterized in that** a total test volume is determined in addition to the indicated characteristics, **in that** the volume flows that are proportional to the predetermined weighting factors are collected, and **in that** the quantity and the number of particles is established based thereupon, and **in that**, taking into account the relationship between the respective suction volume and the total test volume, the integral quantity and number of particles are determined, wherein the volume flow of the exhaust gas that is aspirated over the filter paper of the measuring instrument is adjusted or controlled proportionally relative to the weighting factor, and **in that** the exhaust gas volume that corresponds to this weighting factor is aspirated over this filter paper.

6. The method according to any one of the claims 1 to 5, **characterized in that** a plurality of measurements is taken in succession, the quantity and number of particles is detected for each measurement, and **in that** a mean value and the associated imprecision and/or uncertainty of the measurement is/are calculated.

7. The method according to any one of the claims 1 to 6, **characterized in that** the exhaust gas temperature at the sampling point and/or the mean dwelling time of the exhaust gas from the generation point of the particles to the sampling point are taken into account for the calculation.

8. The method according to any one of the claims 1 to 7, **characterized in that** the second conversion function characterizes, in a dual-logarithmic presentation and in the range of very few up to ca. $10^{14}$ particles per test, a linear relationship between the mass and the number of the particles that changes over to an inverse function with the further increase of the number of particles.

9. The method according to claim 8, **characterized in that** the second conversion function has a peak at a number of ca. 2 to 5 x $10^{14}$ particles per test.

**Revendications**

1. Procédé pour la détermination du nombre de particules dans le gaz d'échappement de moteurs à combustion, dans lequel une grandeur caractéristique d'une quantité de particules est déterminée, par exemple sous la forme d'un noircissement d'un filtre ou d'une détermination de la concentration, dans lequel le temps d'aspiration ou le volume d'aspiration du gaz d'échappement sont mesurés, et dans lequel la valeur de noircissement est calculée dans tous les cas à partir de la grandeur caractéristique et du temps d'aspiration ou du volume d'aspiration du gaz d'échappement, à l'aide d'une première fonction de conversion, dans lequel le nombre de particules est déterminé à l'aide d'une deuxième fonction de conversion, à partir de la grandeur caractéristique, du temps d'aspiration ou du volume d'aspiration et des données de la première fonction de conversion, **caractérisé en ce que** les rapports de pression sur le filtre sont également déterminés, et le diamètre de particule moyen est ainsi déterminé à l'aide d'une troisième fonction de conversion, à partir de ceux-ci et à partir de la quantité de particules, et le nombre de particules est déterminé à l'aide d'une quatrième fonction de conversion, à partir de la grandeur caractéristique, du temps d'aspiration ou du volume d'aspiration, des données de la première fonction de conversion et à partir du diamètre de particule moyen déterminé, à l'aide de différents calculs intermédiaires et de différentes fonctions de conversion, lesquelles peuvent toutes être réunies dans ladite quatrième fonction commune.

2. Procédé selon la revendication 1, **caractérisé en ce qu'**un temps d'aspiration d'au moins 0,1 seconde, de préférence d'au moins 1 seconde, est sélectionné.

3. Procédé selon la revendication 1, **caractérisé en ce que** la demi-largeur de la fonction de répartition des tailles de particule autour de ce diamètre de particule moyen est déterminée à partir du diamètre de particule moyen déterminé et d'un facteur constant, et **en ce que** le nombre de particules est déterminé à partir de la grandeur caractéristique, du diamètre de particule moyen et de la valeur pour la demi-largeur.

4.  Procédé selon l'une des revendications 1 à 3, **caractérisé en ce que** plusieurs mesures sont prélevées les unes après les autres, les quantités de particules déterminées sont totalisées ou intégrées de façon pondérée en fonction de leurs temps d'aspiration, volumes d'aspiration ou longueurs d'aspiration respectifs, et le nombre de particules intégral est déterminé à partir de ces valeurs totalisées pondérées.

5.  Procédé selon l'une des revendications 1 à 4, **caractérisé en ce qu'**en plus des caractéristiques indiquées, un volume d'essai global est déterminé, **en ce que** les débits volumiques proportionnels à des facteurs de pondération prédéfinis sont réunis pour ainsi déterminer la quantité et le nombre de particules, et **en ce que** la quantité et le nombre intégraux de particules sont déterminés à l'aide du rapport entre les différents volumes d'aspiration et le volume d'essai global, le débit volumique du gaz d'échappement aspiré par le biais du papier filtre du dispositif de mesure étant de préférence ajusté ou réglé proportionnellement au facteur de pondération, et la quantité de gaz d'échappement correspondant au facteur de pondération étant ainsi aspirée par le biais de ce papier filtre.

6.  Procédé selon l'une des revendications 1 à 5, **caractérisé en ce que** plusieurs mesures sont prélevées les unes après les autres, la quantité et le nombre de particules sont déterminés pour chaque mesure, et **en ce qu'**une valeur moyenne ainsi que l'inexactitude de mesure ou l'incertitude de mesure correspondante sont calculées.

7.  Procédé selon l'une des revendications 1 à 6, **caractérisé en ce que** la température du gaz d'échappement au point de prélèvement d'échantillons et/ou la durée de séjour moyenne du gaz d'échappement, du lieu d'apparition des particules jusqu'au lieu de prélèvement d'échantillons, sont pris en compte dans le calcul.

8.  Procédé selon l'une des revendications 1 à 7, **caractérisé en ce que** la deuxième fonction de conversion, dans une double représentation logarithmique et dans la plage allant d'une très petite quantité de particules jusqu'à environ $10^{14}$ particules par essai, caractérise un rapport linéaire entre la masse de particules et le nombre de particules, puis se transforme en une fonction inverse en cas de hausse supplémentaire du nombre de particules.

9.  Procédé selon la revendication 8, **caractérisé en ce que** la deuxième fonction de conversion présente un pic avec un nombre d'environ 2 à 5 x $10^{14}$ particules par essai.

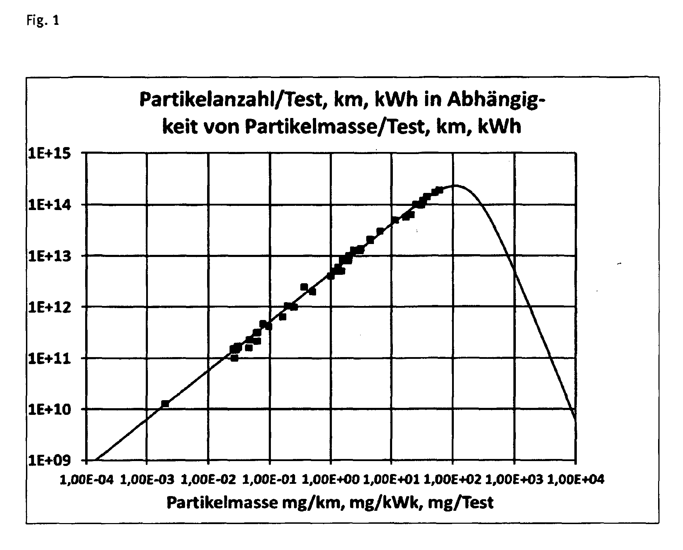

Fig. 1

**Partikelanzahl/Test, km, kWh in Abhängigkeit von Partikelmasse/Test, km, kWh**

Partikelmasse mg/km, mg/kWk, mg/Test

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- AT 6349 U1
- DE 102006024089 A1
- DE 102006041478 A1
- EP 0357668 A

**In der Beschreibung aufgeführte Nicht-Patentliteratur**

- Handbuch für das Smoke Meter AT1240D, rev 7. Mai 2007
- *Motortechnische Zeitschrift,* 1993, vol. 54, 16-22